# DEMANDE DE BREVET EUROPEEN

(11) **EP 4 628 295 A2**
(43) Date de publication de la demande: **08.10.2025**
(21) Numéro de dépôt: 25197331.9
(22) Date de dépôt: 20.12.2017
(51) Int. Cl.: B31D 5/00

(54) **DISPOSITIF DE DISTRIBUTION D'ELEMENT DE CALAGE ET D'EMBALLAGE**

(30) Priorité: 22.12.2016 FR 1663234
(62) Demande divisionnaire de: 17838047.3
(71) Demandeur: GP System, 74940 Annecy-Le-Vieux (FR)
(72) Inventeur: PETERLINI, Jacky, 74940 Annecy Le Vieux (FR)
(74) Mandataire: KATZAROV S.A.

(57) **Abrégé**

Elément de calage et d'emballage (9) comprenant au moins une feuille de papier froissée, formant au moins deux conduits longitudinaux (11) délimitant une zone de liaison (12), tandis que les conduits longitudinaux (11) comprennent chacun un corps creux (15) intérieur continu, correspondant à un profilé intérieur longitudinal délimité par les extrémités intérieures des plis localises à la périphérie des conduits longitudinaux (11), caractérisé en ce que les conduits longitudinaux (11) sont froissés à leurs périphéries et froissés au moins longitudinalement, résultant en des plis orientés sensiblement perpendiculairement par rapport à la direction longitudinale, permettant d'obtenir une résistance améliorée à une compression radiale, à savoir une direction perpendiculaire à la direction longitudinale.

## Description

La présente invention concerne un dispositif de distribution d'éléments de calage et d'emballage, son procédé de mise en œuvre, ainsi que les éléments de calage et d'emballage en tant que tel.

La présence d'élément de calage, protège et enveloppe les articles à empaqueter dans un carton. Ces calages permettent de combler les vides pour caler les objets à l'intérieur d'une caisse et ainsi d'absorber les chocs inhérents aux transports et aux éventuelles chutes.

De nombreux types de solutions de calage sont présents dans le domaine de l'emballage. La tendance générale est d'éliminer les matières non recyclables, et de se diriger vers des emballages en papier recycle.

Les éléments de calage en papier sont froissés de manière grossière, résultant en des propriétés mécaniques acceptables, mais non satisfaisantes.

La présente invention propose ainsi des éléments de calage et d'emballage, permettant de pallier les inconvénients précités.

Ainsi, un élément de calage et d'emballage selon l'invention comprend au moins une feuille de papier froissée, formant au moins deux conduits longitudinaux délimitant une zone de liaison, tandis que les conduits longitudinaux comprennent chacun un corps creux intérieur continu, correspondant à un profilé intérieur longitudinal délimité par les extrémités intérieures des plis localises à la périphérie des conduits longitudinaux, les conduits longitudinaux sont froissés à leurs périphéries et froissée au moins longitudinalement, résultant en des plis orientés sensiblement perpendiculairement par rapport à la direction longitudinale, permettant d'obtenir une résistance améliorée à une compression radiale, à savoir une direction perpendiculaire à la direction longitudinale.

Selon une caractéristique, le corps creux a une section constante ou sensiblement constante sur l'intégralité ou sensiblement l'intégralité de son profilé longitudinal.

Selon des modes de réalisation, le corps creux se présente par un profilé longitudinal ayant une section transversale choisie parmi une forme circulaire, rectangulaire, carrée, oblongue, triangulaire ou hexagonale.

Selon une caractéristique complémentaire, la zone de liaison est constituée uniquement d'au moins deux pans de feuille froissée au moins longitudinalement.

Selon une caractéristique supplémentaire, la zone de liaison est plus froissée que les conduits longitudinaux qui la délimitent.

Précisons que la zone de liaison constitue avantageusement un moyen de fixation d'au moins deux pans de feuille, assurant l'unique moyen de maintien de la forme d'au moins une feuille de papier.

Notons que les extrémités longitudinales des conduits longitudinaux sont préférentiellement ouvertes vers l'extérieur.

Selon une caractéristique, les extrémités longitudinales d'un élément de calage et d'emballage ne sont sensiblement pas froissées et délimitent une zone centrale froissée dans laquelle le volume intérieur est plus important qu'aux extrémités longitudinales.

L'invention concerne également un consommable pour la production d'élément de calage et d'emballage selon l'invention, le consommable se présentant sous la forme d'une bande de papier pré-pliée en trois pans, dans lesquelles les trois pans sont pliés par deux lignes de pliure longitudinales délimitant trois pans de feuilles dont les pans latéraux se chevauchent au moins partiellement.

Selon une caractéristique, la bande de papier pré-pliée comprend des zones de pré-découpe régulièrement reparties sur sa longueur.

Selon la caractéristique précédente, les zones de pré-découpe s'étendent d'un bord à l'autre de la bande de papier pré-pliée, à savoir de chacune des extrémités extérieures des pans latéraux.

D'autres caractéristiques et avantages de l'invention se dégageront de la description qui va suivre en regard des dessins annexes qui ne sont donnes qu'à titre d'exemples non limitatifs.

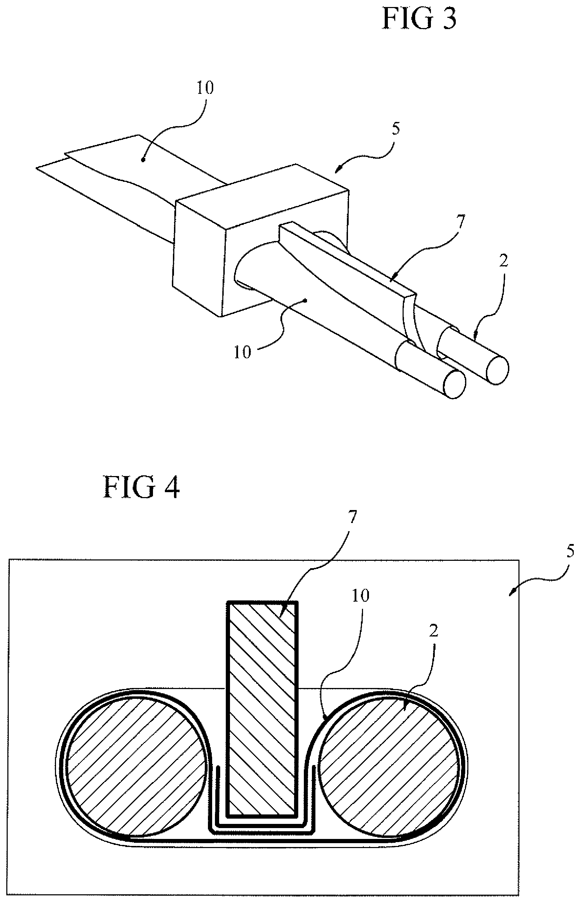

Les figures 1 à 9 sont des vues d'un dispositif de distribution d'élément de calage et d'emballage selon un mode de réalisation de I 'invention.
La figure 1 est une vue en perspective.
La figure 2 est une vue en coupe selon A-A.
La figure 3 est une vue partielle en perspective.
La figure 4 est une vue en coupe selon B-B de la figure 2.
La figure 5 est une vue en coupe selon C-C de la figure 2.
La figure 6 est une vue en perspective d'un moyen d'insertion localise dans le prolongement d'un moyen de conformation.
Les figures 7 à 9 sont des vues en perspective illustrant l'insertion d'une bande de papier dans le moyen d'insertion vers le moyen de conformation.
La figure 10a est une vue en perspective d'un élément de calage et d'emballage selon un mode de réalisation de l'invention.
La figure 10b est une vue en perspective d'un élément de calage et d'emballage selon un autre mode de réalisation de l'invention.
La figure 11 est une vue en perspective d'un consommable.

La présente invention concerne tout d'abord, un dispositif de distribution (1) d'élément de calage et d'emballage (9) à partir d'au moins une bande de papier (10).

Le dispositif de distribution (1) selon l'invention comprend au moins deux moyens de guidage (2) ayant chacun au moins une extrémité libre indépendante, autour au moins desquelles est enroulée au moins une bande de papier (10), tandis qu'il comprend un moyen d'entrainement (3) d'au moins une bande de papier (10), et au moins un moyen de froissement (4) d'au moins une bande de papier (10) en aval du moyen d'entrainement (3).

Selon une caractéristique, les moyens de guidage (2) ont des profils longitudinaux, tout du long desquels est enroulée au moins une bande de papier (10).

Selon la caractéristique précédente, les moyens de guidage (2) s'étendent tout du long de la mise en forme des éléments de calage et d'emballage (9) produits, à savoir que les moyens de guidage (2) s'étendent depuis la sortie du moyen de conformation (5) jusqu'au moyen de froissement (4), tel qu'explicité plus en détail dans la suite de la description.

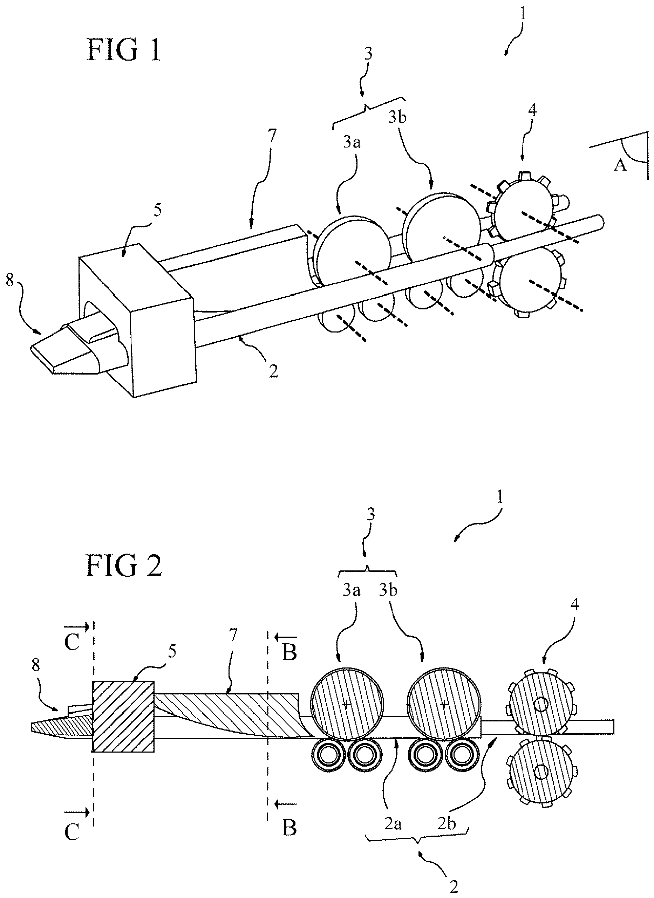

Les profils longitudinaux des moyens de guidage (2) peuvent avoir toute forme de section, telle que circulaire, rectangulaire, carrée, oblongue, voire triangulaire ou hexagonale, de préférence circulaire telle qu'illustrée notamment à la figure 1.

Selon la caractéristique précédente, les moyens de guidage (2) sont orientés dans une même direction de manière parallèle.

Selon le mode de réalisation illustre, les moyens de guidage (2) comprennent au moins deux parties (2a, 2b) ayant des sections décroissantes, à savoir une première partie (2a) en amont d'une seconde partie (2b) ayant une section plus faible que la première.

Notons que deux moyens de guidage (2) délimitent un espace central dans lequel est localise au moins un moyen de positionnement (7) d'au moins une bande de papier (10).

Précisons qu'un moyen de positionnement (7) conforme au moins une bande de papier (10) dans un espace central, entre deux moyens de guidage (2).

Plus précisément un moyen de positionnement (7) conforme tous les pans en correspondance de ce moyen de positionnement (7), à savoir au moins deux pans d'au moins une bande de papier (10) les uns en regard des autres, de préférence conforme les pans les uns contre les autres.

Selon un mode d'exécution, au moins un moyen de positionnement (7) conforme au moins une bande de papier (10) en direction d'un moyen de froissement (4).

Selon le mode de réalisation illustre, un moyen de positionnement (7) conforme au moins une bande de papier (10) en direction d'un moyen d'entrainement (3) puis d'un moyen de froissement (4), tous deux localisés dans un espace central entre deux moyens de guidage (2), à savoir qu'un moyen de positionnement (7), un moyen d'entrainement (3) et un moyen de froissement (4) sont alignés le long d'un espace central.

Selon le mode de réalisation précèdent, le moyen d'entrainement (3) est localisé entre les premières parties (2a) des moyens de guidage (2), tandis que le moyen de froissement (4) est agence entre les secondes parties (2b) des moyens de guidage (2).

En d'autres termes, au moins un moyen de positionnement (7) conforme au moins une bande de papier (10) en amont du moyen de froissement (4), préférentiellement en amont du moyen d'entrainement (3), avantageusement de telle manière à ce qu'au moins une bande de papier (10) s'enroule sensiblement à la périphérie de chacun des moyens de guidage (2).

Le positionnement du moyen de froissement (4) au niveau des secondes parties (2b) des moyens de guidage (2), permet d'obtenir des zones froissées ayant des hauteurs plus importantes que si l'opération de froissement était réalisée sur un profilé longitudinal ayant une section constante. Ces zones froissées ont une meilleure résistance à la compression que si elles étaient uniquement froissées partiellement a la périphérie des conduits.

Précisons que le moyen de froissement (4) est avantageusement un moyen qui ralentit ou qui entraine au moins une bande de papier (10) a une vitesse inférieure à celle du moyen d'entrainement (3).

Selon le mode de réalisation illustre un moyen de froissement (4) se présente sous la forme de I 'association de deux roues crantées dont les crans respectifs de chacune des roues sont décalés, afin que les roues n'entrent pas en contact.

Selon le mode de réalisation précèdent, les roues crantées sont reliées mécaniquement et sont entrainées par un unique moteur, ce qui évite également que les roues rentrent en contact et endommage le dispositif.

Précisons également que plus la différence de vitesse est importante entre un moyen d'entrainement (3) et un moyen de froissement (4) et plus les plis sont concentrés. Un plus grand nombre de plis améliore la résistance à la compression transversale.

Selon le mode de réalisation illustre, un moyen d'entrainement (3) comprend un train avant (3b) et un train arrière (3a) qui comprennent chacun une roue d'entrainement munie d'une paire de roulement.

Selon une caractéristique, une roue d'entrainement est mise en contact contre les roulements qui lui sont associes par une force verticale exercée par des ressorts.

Selon la caractéristique précédente, les pans d'au moins une bande de papier (10), à savoir au moins deux pans, sont entraines par la mise sous contrainte entre les roues d'entrainement et les roulements, et la mise en mouvement des trains avant (3b) et arrière (3a).

Le train avant (3b) est accouplé à un moteur, tandis que le train arrière est accouplé à ce même moteur par l'intermédiaire d'un embrayage et/ou d'un moyen de freinage, tel qu'un frein magnétique.

Notons que le train avant (3b) est localisé en aval du train arrière (3a).

Ce mode de fonctionnement du moyen d'entrainement (3) permet lors d'un débrayage ou d'un freinage du train arrière (3a) de couper un élément de calage et d'emballage (9) selon une longueur déterminée par la rupture d'au moins une bande de papier (10) le long des zones de prédécoupe.

Selon le mode de réalisation illustre, le dispositif de distribution (1) comprend également au moins trois cellules de détection, à savoir une première cellule en amont du train arrière (3a), une seconde cellule entre les deux trains (3a, 3b), ainsi qu'une troisième cellule entre le train avant (3b) et le moyen de froissement (4). La présence de ces cellules de détection permet de déterminer la position d'au moins une bande de papier (10), d'animer les moteurs, embrayages et freins en fonction des demandes.

Selon un mode d'exécution particulier, non représenté, un moyen d'entrainement (3) et au moins un moyen de froissement (4) sont représentés respectivement par un train arrière (3a) et un train avant (3b), dans lesquels le train avant (3b) est mis à une vitesse inférieure à celle du train arrière (3a).

Selon une caractéristique, le dispositif de distribution (1) comprend un moyen de conformation (5) d'au moins une bande de papier (10) autour de la périphérie extérieure d'au moins deux moyens de guidage (2), en amont de ces derniers.

Ce moyen de conformation (5) présente une entré et une sortie permettant a au moins une bande de papier (10) de s'enrouler autour des moyens de guidage (2).

Selon le mode de réalisation illustre, le moyen de conformation (5) comprend un passage d'au moins une bande de papier (10), qui se présente par un chemin (6) fermé qui permet l'enroulement d'au moins une bande de papier (10) sur elle-même, à savoir que les extrémités d'une bordure du chemin (6) se chevauchent avantageusement de manière décalée.

Selon un autre mode de réalisation, le moyen de conformation (5) se présente par un chemin (6) fermé dont ses extrémités sont localisées latéralement d'un même côté, à savoir que le chemin (6) se présente sous une forme de C écrasé.

Notons que les extrémités amonts des moyens de guidage (2) sont fixées ou moulées au moyen de conformation (5).

Plus précisément, tel qu'illustre à la figure 2, les extrémités amonts des moyens de guidage (2) sont localisées à l'intérieur de l'espace agencé par le chemin (6) du moyen de conformation (5) d'au moins une bande de papier (10).

Selon une caractéristique supplémentaire, un moyen d'insertion (8) est ajouté en amont du moyen de conformation (5), afin de faciliter le positionnement d'au moins une bande de papier (10) dans ce dernier, plus précisément de faciliter l'insertion d'au moins une bande de papier (10) dans le chemin (6) du moyen de conformation (5), qui a son tour facilite le positionnement d'au moins une bande de papier (10) autour des moyens de guidage (2).

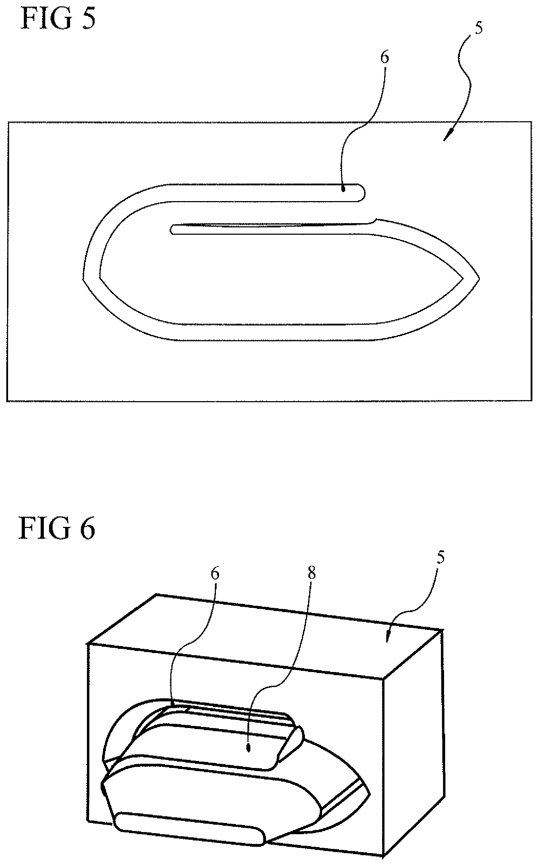

Selon un mode de réalisation, notamment illustre à la figure 6, le moyen d'insertion (8) se présente sous la forme d'une rampe, qui est une extension vers l'extérieur du chemin (6) du moyen de conformation (5).

En d'autres termes, le moyen d'insertion (8) est un profilé dirige vers l'extérieur, dans le prolongement du chemin (6).

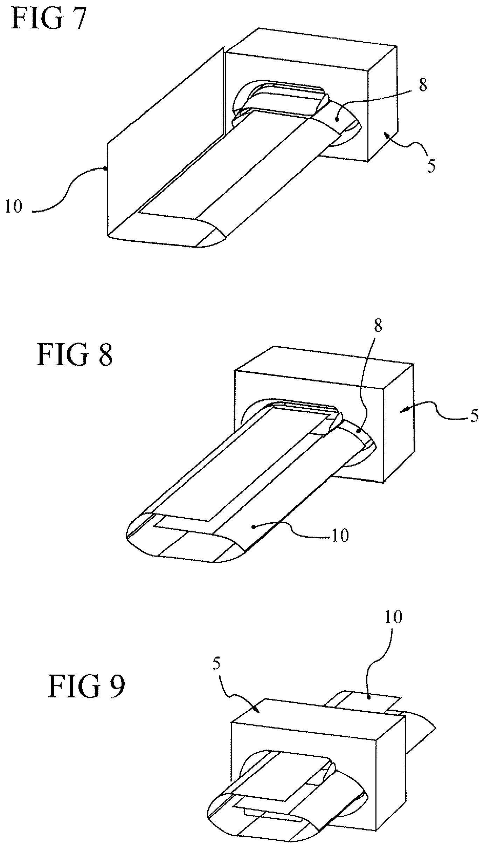

Tel qu'illustre aux figures 7 à 9, un pan latéral de la bande de papier (10) est inséré en regard et en butée contre l'extrémité intérieure du chemin (6), plus précisément est présenté contre le partie de profilé du moyen d'insertion (8) agencée dans le prolongement de l'extrémité intérieure du chemin (6), tandis que l'autre pan latéral de la bande de papier est engagé contre la partie du profilé du moyen d'insertion (8) agencée dans le prolongement de l'extrémité extérieure du chemin (6), de telle manière à insérer sans difficulté la bande de papier dans le moyen de conformation (5).

Un élément de calage et d'emballage (9) selon l'invention est destiné avantageusement à s'enrouler autour d'au moins une partie d'un article à protéger, qui est préalablement ou postérieurement place dans un carton.

II est entendu qu'un élément de calage et d'emballage (9) peut être également disposé au fond et/ou au-dessus du ou des articles à protéger.

Ajoutons que l'élément de calage et d'emballage (9) selon l'invention est réalisé en papier froissé et se présente par au moins une zone de liaison (12) délimitée par deux conduits longitudinaux (11).

Précisons que les conduits longitudinaux (11) ont un profil général régulier, dont la forme dépend de celle des moyens de guidage (2) employés.

II est entendu que les conduits longitudinaux (11) sont froissés à leurs périphéries, cependant leurs profils généraux correspondent à ceux des moyens de guidage (2).

Le fait que les conduits longitudinaux (11) conservent un profil général régulier, tout en étant froisses à leurs périphéries, permet d'obtenir des propriétés mécaniques améliorées, en termes de résistance notamment à une compression radiale, à savoir une direction perpendiculaire à la direction longitudinale de l'élément de calage et d'emballage selon l'invention.

II est entendu par profil général régulier un profil ayant une section générale cylindrique, oblongue, parallélépipédique, voire triangulaire, tout en étant froisse à sa périphérie.

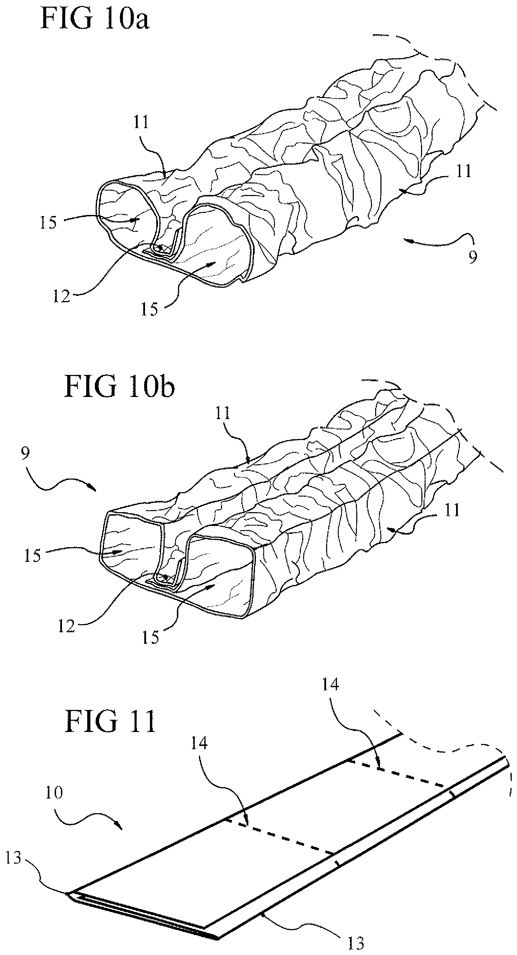

Selon une caractéristique complémentaire, telle qu'illustrée aux figures 10a et 10b, les conduits longitudinaux (11) comprennent un corps creux (15) continu correspondant aux profils des secondes parties (2b) des moyens de guidage (2), à savoir correspondant à un profilé intérieur délimité par les extrémités intérieures des plis localises à la périphérie des conduits longitudinaux (11).

Selon la caractéristique précédente, un corps creux (15), à savoir un profilé intérieur, a une section constante ou sensiblement constante sur l'intégralité ou sensiblement l'intégralité de son profilé longitudinal, égale ou sensiblement égale à celle d'une seconde partie (2b) d'un moyen de guidage (2).

Précisons que le profil d'un corps creux (15) est inclus dans celui du conduit longitudinal (11) dans lequel il est logé.

Précisons également qu'un corps creux (15) se présente par un profilé ayant une section transversale de forme choisie parmi circulaire, rectangulaire, carrée, oblongue, triangulaire ou hexagonale.

La présence d'un corps creux (15) apporte non seulement, pour une même quantité de papier, un volume plus important à la structure résultante, mais également apporte un renforcement à la structure par effet de voute par répartition des contraintes le long de sa périphérie.

Afin d'obtenir sa forme définitive, un élément de calage et d'emballage (9) selon l'invention ne comprend avantageusement pas de moyen de fixation tel que par perforation, collage ou par l'utilisation d'agrafe, autre que des moyens de liaison par froissement, le long d'au moins une zone de liaison (12), d'au moins une feuille de papier.

Notons qu'un élément de calage et d'emballage (9) est constitué d'au moins une feuille de papier, de préférence constitue d'une feuille de papier, enroulée sur elle-même et froissée au moins longitudinalement au moins au niveau d'une zone de liaison (12).

Précisons qu'une zone de liaison (12) est uniquement froissée de manière régulière tout du long de son profil longitudinal.

Selon une caractéristique, une zone de liaison (12) est plus froissée que les conduits longitudinaux (11) qui la délimitent.

Selon la caractéristique précédente, la structure particulière d'un élément de calage selon l'invention apporte une résistance améliorée aux écrasements radiaux.

Une zone de liaison (12) constitue un moyen de fixation d'au moins deux pans de feuille, assurant l'unique moyen de maintien de la forme d'au moins une feuille de papier résultant en un élément de calage et d'emballage (9).

Précisons qu'un élément de calage et d'emballage (9) est obtenu à partir d'au moins une bande de papier (10) enroulée dans laquelle au moins deux pans, de préférence au moins trois pans de la bande se chevauchent et sont froisses selon au moins une zone de liaison (12) longitudinale ou sensiblement longitudinale, voire rectiligne ou sensiblement rectiligne, tandis que la bande de papier (10) froissée est ensuite découpée en feuille de papier froissée à la longueur désirée, de préférence découpée le long de lignes de perforation transversales.

Ainsi, selon une caractéristique, une bande de papier (10) comprend des zones de pré-découpe, se présentant par des lignes de perforation agencées transversalement, qui sont régulièrement reparties sur la longueur de la bande de papier (10).

En d'autres termes, un élément de calage (9) se présente par au moins une feuille de papier enroulée sur elle-même et froissée le long d'au moins une zone de liaison (12) avantageusement longitudinale ou sensiblement longitudinale, voire rectiligne ou sensiblement rectiligne, dans laquelle tous les pans de feuille enroules en correspondance d'au moins une zone de liaison (12) sont froisses au sein de cette zone de liaison (12), de manière à former de part et d'autre d'au moins une zone de liaison (12), des conduits longitudinaux (11) dont les profils généraux sont orientes suivant le profil général de la zone de liaison (12).

Précisons également qu'au moins une zone de liaison (12) est parallèle ou sensiblement parallèle aux extrémités latérales de l'élément de calage et d'emballage (9).

Il est entendu qu'étant donné que le papier est froissé, c'est le profil général d'une zone de liaison (12) qui est parallèle ou sensiblement parallèle aux extrémités latérales de L'élément de calage et d'emballage (9).

Précisons également que les conduits longitudinaux (11) délimitant une zone de liaison (12), sont également parallèles ou sensiblement parallèle à cette dernière et aux extrémités latérales de L'élément de calage et d'emballage (9).

II est également entendu qu'étant donné que le papier est froissé, ce sont les profils généraux des conduits longitudinaux (11) qui sont parallèles ou sensiblement parallèles au profil général de la zone de liaison (12) et aux extrémités latérales de l'élément de calage et d'emballage (9).

Selon une caractéristique une feuille de papier froissée enroulée sur elle-même comprend au moins une zone de liaison (12) d'au moins deux pans, voire trois pans de feuille.

Selon des modes de réalisation, un élément de calage et d'emballage (9) forme d'au moins deux feuilles de papier est obtenu à partir de la superposition d'au moins deux bandes de papier (10) pré-pliées ou non.

A titre d'exemple un élément de calage et d'emballage (9) peut présenter deux, trois, quatre ou cinq conduits longitudinaux (11) adjacents, orientes dans une même direction, délimités par respectivement une, deux, trois ou quatre zone(s) de liaison (12) parallèles ou sensiblement parallèles, tout du moins parallèle(s) aux extrémités latérales de l'élément de calage et d'emballage (9) selon l'invention.

Selon une caractéristique, les extrémités longitudinales des conduits longitudinaux (11), à savoir les extrémités au niveau desquelles la bande de papier (10) est découpée, sont ouvertes vers l'extérieur.

Selon un mode de réalisation, non illustre, les extrémités longitudinales d'un élément de calage et d'emballage (9) ne sont pas froissées, tout du moins sensiblement pas froissées et délimitent une zone centrale froissée dans laquelle le volume intérieur est plus important qu'aux extrémités longitudinales.

Selon le mode de réalisation illustré, un élément de calage et d'emballage (9) selon l'invention est obtenu à partir d'au moins un consommable qui se présente sous la forme d'une bande de papier (10) pré pliée en trois pans.

Selon le mode de réalisation précèdent, un élément de calage et d'emballage (9) forme d'au moins une feuille de papier froissée est obtenu à partir d'au moins une bande de papier (10) pré-pliée par deux lignes de pliure longitudinales (13) délimitant trois pans de feuilles dont les pans latéraux se chevauchent au moins partiellement.

Notons qu'une bande de papier (10) est pré-pliée de telle manière à ce que ses extrémités latérales soient rabattues sur la face supérieure de sa portion centrale, de manière à ce qu'elles se chevauchent.

En d'autres termes, la bande de papier (10) pré-pliée est délimitée en trois pans, à savoir un pan central et deux pans latéraux, les extrémités extérieures des pans latéraux étant adjacents, de telle manière à ce qu'un premier pan latéral est plié sur le pan central, tandis que le second pan latéral est plié sur le premier pan latéral.

Selon une caractéristique, la bande de papier (10) pré-pliée comprend des zones de pré-découpe (14) régulièrement reparties sur sa longueur.

Selon la caractéristique précédente, les zones de pré-découpe (14) s'étendent d'un bord à l'autre de la bande de papier (10) pré-pliée, à savoir de chacune des extrémités extérieures des pans latéraux.

## Revendications

1. Elément de calage et d'emballage (9) comprenant au moins une feuille de papier froissée, formant au moins deux conduits longitudinaux (11) délimitant une zone de liaison (12), tandis que les conduits longitudinaux (11) comprennent chacun un corps creux (15) intérieur continu, correspondant à un profilé intérieur longitudinal délimité par les extrémités intérieures des plis localises à la périphérie des conduits longitudinaux (11),
**caractérisé en ce que** les conduits longitudinaux (11) sont froissés à leurs périphéries et froissés au moins longitudinalement, résultant en des plis orientés sensiblement perpendiculairement par rapport à la direction longitudinale, permettant d'obtenir une résistance améliorée à une compression radiale, à savoir une direction perpendiculaire à la direction longitudinale.

2. Elément de calage et d'emballage (9) selon la revendication 1, **caractérisé en ce que** le corps creux (15) a une section constante ou sensiblement constante sur l'intégralité ou sensiblement l'intégralité de son profilé longitudinal.

3. Elément de calage et d'emballage (9) selon la revendication 1 ou 2, **caractérisé en ce que** le corps creux (15) se présente par un profilé longitudinal ayant une section transversale choisie parmi une forme circulaire, rectangulaire, carrée, oblongue, triangulaire ou hexagonale.

4. Elément de calage et d'emballage (9) selon l'une quelconque des revendications précédentes, **caractérisé en ce que** la zone de liaison (12) est constituée uniquement d'au moins deux pans de feuille froissée au moins longitudinalement.

5. Elément de calage et d'emballage (9) selon l'une quelconque des revendications précédentes, **caractérisé en ce que** la zone de liaison (12) est plus froissée que les conduits longitudinaux (11) qui la délimitent.

6. Elément de calage et d'emballage (9) selon l'une quelconque des revendications précédentes, **caractérisé en ce que** la zone de liaison (12) constitue un moyen de fixation d'au moins deux pans de feuille, assurant l'unique moyen de maintien de la forme d'au moins une feuille de papier.

7. Elément de calage et d'emballage (9) selon l'une quelconque des revendications précédentes, **caractérisé en ce que** les extrémités longitudinales des conduits longitudinaux (11) sont ouvertes vers l'extérieur.

8. Elément de calage et d'emballage (9) selon l'une quelconque des revendications précédentes, **caractérisé en ce que** les extrémités longitudinales d'un élément de calage et d'emballage (9) ne sont sensiblement pas froissées et délimitent une zone centrale froissée dans laquelle le volume intérieur est plus important qu'aux extrémités longitudinales.

9. Consommable pour la production d'élément de calage et d'emballage (9) selon l'une quelconque des revendications précédentes, **caractérisé en ce que** le consommable se présente sous la forme d'une bande de papier (10) pré-pliée en trois pans, dans lesquelles les trois pans sont pliés par deux lignes de pliure longitudinales (13) délimitant trois pans de feuilles dont les pans latéraux se chevauchent au moins partiellement.

10. Consommable selon la revendication précédente, **caractérisé en ce que** la bande de papier (10) pré-pliée comprend des zones de pré-découpe (14) régulièrement reparties sur sa longueur.

11. Consommable selon la revendication précédente, **caractérisé en ce que** les zones de pré-découpe (14) s'étendent d'un bord à l'autre de la bande de papier (10) pré-pliée, à savoir de chacune des extrémités extérieures des pans latéraux.
